# EUROPEAN PATENT SPECIFICATION

(11) **EP 3 202 657 B1**
(45) Date of publication and mention of the grant of the patent: **24.10.2018**
(21) Application number: 17153657.6
(22) Date of filing: 30.01.2017
(51) Int. Cl.: B63B 39/00, B63H 9/02

(54) **METHOD AND APPARATUS FOR DAMPING MOTIONS OF VESSEL**
VERFAHREN UND VORRICHTUNG ZUR DÄMPFUNG VON BEWEGUNGEN EINES SCHIFFS
PROCÉDÉ ET DISPOSITIF D'AMORTISSEMENT DES MOUVEMENTS DE VAISSEAU

(30) Priority: 02.02.2016 FI 20165073
(43) Date of publication of application: 09.08.2017
(73) Proprietor: Norsepower Oy, 00180 Helsinki (FI)
(72) Inventor: Riski, Tuomas, 00150 Helsinki (FI); Väinämö, Tuomas, 02330 Espoo (FI); von Boehm, Pauli, 00500 Helsinki (FI)
(74) Representative: Suominen, Kaisa Liisa

(56) References cited:
- EP-A1- 1 498 348
- DE-A1- 2 430 630
- DE-A1-102006 025 732
- DE-A1-102010 040 903
- DE-A1-102010 040 920

## Description

### TECHNICAL FIELD

The present disclosure relates generally to controlling motions of an aquatic vessel; and, more specifically, to a method and an apparatus for damping motions of a vessel by using Magnus rotors.

### BACKGROUND

Aquatic vessels, such as cargo ships and passenger ships, are generally exposed to varying weather conditions (such as different wind conditions, air pressures, air temperatures and the like), which may affect movement (or motion) of the vessel. For example, such changes in the weather condition may cause waves of different heights and speeds, which may induce rolling motion in the vessel depending on how the vessel is aligned with respect to such waves. Typically, the rolling motion of the vessel can cause harm to the vessel or the cargo carried by the vessel, and even cause injury to the passengers or crew members present in the vessel. Currently, there are various methods and systems used for damping such rolling motions of the vessel. In general, such systems may include passive systems or active systems. The passive systems may include but not limited to bilge keel, passive anti-rolling tanks, fixed fins, passive moving weight system and sails. The passive systems do not require power and control system; and therefore they are not flexible enough to efficiently deal with varying levels of rolling motions (to which the vessel is subjected). Further, the active systems may include but not limited to active fins, active anti-rolling tanks, active moving weight and gyroscope, which generally require power and control system. However, the application of active systems leads to more power (or fuel) consumption.

Magnus rotors (Flettner rotors) are traditionally used to provide forward thrust to the vessel to act as an auxiliary or primary propelling device. Magnus rotors can traditionally be alternatively used as submerged devices for damping the rolling motion of the vessel. In such instance, the counteracting Magnus force is generated by rotating the submerged Magnus rotors in the water flow, which is passing by due to the moving vessel. Further, an anchored vessel is stabilized using a similar submerged Magnus rotor but the water flow is created by moving the Magnus rotor back and forth around a pivotal point and simultaneously rotating the Magnus rotor. Therefore, application of a submerged Magnus rotor in roll damping leads to more power consumption. Also, such submerged Magnus rotors do not use wind conditions (such as wind speed and direction) for roll damping. Furthermore, due to small size and mass such submerged Magnus rotors are not efficient in gyroscopic stabilization of the movements of the vessel. Moreover, submerged roll damping devices (such as the submerged Magnus rotors) extend from a hull of the vessel and cause drag when the vessel is moving and because of that they increase the power consumption. Traditionally, the Magnus rotors (arranged above a water line of the vessel and attached to a body of the vessel) are only used for propelling the vessel and they are not used for damping motions of the vessel.

Document DE 10 2010 040 920 relates to a ship comprising a plurality of Magnus rotors. Each Magnus rotor is associated with an electric motor which can be controlled individually and which is used to rotate the Magnus rotor. Each electric motor is associated with a converter in order to control the rotational speed and/or the rotational direction of the electric motor. The ship also comprises a central control unit which is connected to the converters, to control the individual converters, in order to control the rotational speed and/or the rotational direction of the Magnus rotors, independently from the other Magnus rotors. Said control unit controls the Magnus rotor in a first operational mode in such a manner that a maximal drive force is reached. The document mentions that stabilization of the ship in a heavy swell can be achieved by suitable control of the respective Magnus rotors. Document EP 1498348 relates to active roll stabilisation system for ships, comprising at least one rotatable stabilisation element extending below the water line, sensor means for sensing the ship's movements and delivering control signals on the basis thereof to driving means for rotating the stabilisation element for the purpose of damping the ship's movements that are being sensed. The system is usable while the ship is sailing and while it is at anchor. It also comprises displacement means for moving the stabilisation element with respect to the ship, making it possible to create a relative movement of the rotating stabilisation element with respect to the water. This way the Magnus effect will occur at all times and the correction force thus being generated can be uses for damping the ship's movements.

Therefore, in light of the foregoing discussion, there exists a need to overcome the aforementioned drawbacks of the conventional motion damping arrangements for an aquatic vessel.

### SUMMARY

The present disclosure seeks to provide a method for damping motions of a vessel by using Magnus rotors. The present disclosure also seeks to provide an apparatus for damping motions of a vessel having Magnus rotors. A further object of the invention is to provide a method and apparatus allowing effective damping of motions of a vessel, in an economic way from the energy point of view. A further object is to provide a method and apparatus for damping motions of a vessel, that uses equipment already present on the vessel, i.e. in a cost-effective manner.

In one aspect, an embodiment of the present disclosure provides a method for damping motions of a vessel by using Magnus rotors, the vessel comprising at least a first Magnus rotor arranged above a water line of the vessel and attached to a body of the vessel, the method comprising:
- determining relative wind direction and relative wind speed;
- selecting a damping mode from a group comprising at least a first damping mode and a second damping mode;
- determining an optimised rotation speed value and rotation direction for the first Magnus rotor to optimise a frictional resistance of the first Magnus rotor for the selected damping mode, by calculating the frictional resistance the first Magnus rotor would generate against motions of the vessel with alternative rotation speed values and rotation directions, and based on the determined relative wind direction and relative wind speed; and
- using the optimised rotation speed value and rotation direction of the first Magnus rotor, for damping the motions of the vessel.

In another aspect, an embodiment of the present disclosure provides an apparatus for damping motions of a vessel, the apparatus comprising:
- at least a first Magnus rotor attachable to the body of the vessel, above a water line of the vessel, wherein the first Magnus rotor is rotatable with a controllable electrical motor; and
- a controller unit configured to
   - receive relative wind direction and relative wind speed from a wind measurement system;
   - select a damping mode from a group consisting of at least a first damping mode and a second damping mode;
   - determine an optimised rotation speed value and rotation direction for the first Magnus rotor to optimise a frictional resistance of the first Magnus rotor for the selected damping mode, by calculating the frictional resistance the first Magnus rotor would generate against motions of the vessel with alternative rotation speed values and rotation directions, and based on the determined relative wind direction and relative wind speed; and
   - control the controllable electrical motor to rotate the first Magnus rotor with the optimised rotation speed and rotation direction to damp motions of the vessel.

Embodiments of the present disclosure substantially eliminate or at least partially address the aforementioned problems in the prior art, and enable an efficient damping of motions of a vessel, particularly, using Magnus rotors.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
- FIG. 1 is: a schematic illustration of a vessel having an apparatus for damping motions of the vessel, in accordance with an embodiment of the present disclosure;
- FIGS. 2-5: are control diagrams associated with a controller unit of the apparatus for implementation of various embodiments of the present disclosure;
- FIG. 6: is an illustration of steps of a method for damping motions of a vessel by using Magnus rotors, in accordance with an embodiment of the present disclosure; and
- FIG. 7: is an illustration of the various movements of a vessel.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a method for damping motions of a vessel by using Magnus rotors, the vessel comprising at least a first Magnus rotor arranged above a water line of the vessel and attached to a body of the vessel, the method comprising:
- determining relative wind direction and relative wind speed;
- selecting a damping mode from a group comprising at least a first damping mode and a second damping mode;
- determining an optimised rotation speed value and rotation direction for the first Magnus rotor to optimise a frictional resistance of the first Magnus rotor for the selected damping mode, by calculating the frictional resistance the first Magnus rotor would generate against motions of the vessel with alternative rotation speed values and rotation directions, and based on the determined relative wind direction and relative wind speed; and
- using the optimised rotation speed value and rotation direction of the first Magnus rotor, for damping the motions of the vessel.

In another aspect, an embodiment of the present disclosure provides an apparatus for damping motions of a vessel, the apparatus comprising:
- at least a first Magnus rotor attachable to the body of the vessel, above a water line of the vessel, wherein the first Magnus rotor is rotatable with a controllable electrical motor; and
- a controller unit configured to
   - receive relative wind direction and relative wind speed from a wind measurement system;
   - select a damping mode from a group consisting of at least a first damping mode and a second damping mode;
   - determine an optimised rotation speed value and rotation direction for the first Magnus rotor to optimise a frictional resistance of the first Magnus rotor for the selected damping mode, by calculating the frictional resistance the first Magnus rotor would generate against motions of the vessel with alternative rotation speed values and rotation directions, and based on the determined relative wind direction and relative wind speed; and
   - control the controllable electrical motor to rotate the first Magnus rotor with the optimised rotation speed and rotation direction to damp motions of the vessel.

In an embodiment, the vessel is an aquatic vessel which may include a cargo ship, a passenger ship, a liner and the like. Specifically, the vessel includes at least one Magnus rotor operable to propel the vessel through a sea, a lake or a river.

In the present embodiment, the apparatus for damping the motions of the vessel comprises at least the first Magnus rotor. The first Magnus rotor is attachable to the body of the vessel, and above a water line of the vessel. In other words, the first Magnus rotor is not submerged under water. Further, the first Magnus rotor is operable to propel the vessel by taking benefit of a forward thrust generated by a Magnus effect. Moreover, the first Magnus rotor is rotatable with a controllable electrical motor for generating the Magnus effect (or rotate) to propel the vessel.

The at least one Magnus rotor (such as the first Magnus rotor) of the vessel may also act as a roll damping device. Specifically, when the vessel is sailing or anchored, the first Magnus rotor generates frictional force against movements (or motions) of the vessel to prevent or retard the movements of the vessel. For example, while sailing, the first Magnus rotor dampens the rolling motion due to roll-balancing sideway forces generated by the first Magnus rotor in addition to the forward thrust. Further, when the first Magnus rotor is operational (or rotating), the first Magnus rotor works as a big gyroscope, which resists any angular movement against its rotation axis. Based on this phenomenon, the operational first Magnus rotor damps both pitch and roll motions of the vessel.

In an embodiment, the movements (for which the first Magnus rotor generates frictional or resistant force) may be at least one of linear and rotational. The linear movements can be at least one of heave, sway and surge. The term heave refers to a linear vertical (i.e. up/down) motion of the vessel. The term sway refers to a linear lateral motion of the vessel, i.e. side-to-side or port-starboard motion of the vessel. The term surge refers to linear longitudinal motion of the vessel imparted by maritime conditions, i.e. front/back or bow/stern motion of the vessel. Further, the rotational movements can be at least one of roll, pitch and yaw. The term roll refers to tilting rotation of the vessel about its longitudinal/X axis (for example, side-to-side motion of the vessel). The term pitch refers to up/down rotation of the vessel about its lateral/Y axis (for example, front-back motion of the vessel). The term yaw refers to turning rotation of the vessel about its vertical/Z axis.

In an embodiment, at least one movement (such as the roll, the pitch, the yaw, the surge, the sway, and the heave) of the vessel is determined based on angular and/or linear acceleration. Further, the present disclosure enables selection of a damping mode based on the determined at least one movement (i.e. the roll, the pitch, the yaw, the surge, the sway and the heave), which will be described in detail herein later.

The method further comprises at least one of determining a linear acceleration of the vessel, determining an angular acceleration of the vessel and determining speed of the vessel. The method also comprises using the determined at least one of linear acceleration, angular acceleration or speed for determining the optimised rotation speed value and rotation direction for the first Magnus rotor.

According to another embodiment, the group of damping modes comprises a third damping mode. The group of damping modes may naturally also comprise any further number of damping modes, such as a fourth, a fifth, a sixth or a seventh damping mode.

Further, in the method, at least one of roll, pitch, yaw, surge, sway, and heave of the vessel may be determined based on angular and/or linear acceleration and the selection of damping mode may be based on the determined at least one of roll, pitch, yaw, surge, sway and heave. Moreover, in the method, the damping mode can be one of optimised energy consumption, maximum roll damping or a balance between optimised energy consumption and maximum roll damping. Additionally, in the method, the vessel may comprise at least a second Magnus rotor arranged above the water line of the vessel and attached to the body of the vessel, the method further comprising determining an optimised rotation speed value and rotation direction for the second Magnus rotor, by determining an optimised rotation speed value and rotation direction for the second Magnus rotor to optimise a frictional resistance of the second Magnus rotor for the selected damping mode, by calculating the cumulative frictional resistance the first Magnus rotor and the second Magnus rotor would generate against motions of the vessel with alternative rotation speed values and rotation directions, and based on the determined relative wind direction and relative wind speed.

The apparatus of the present disclosure further comprises the controller unit. In an embodiment, the controller unit is communicably coupled to a set of sensors. In an embodiment, the set of sensors include but not limited to sensors associated with a wind measurement system. For example, the set of sensors include wind sensors for the wind measurement system. The set of sensors also includes air temperature sensors, air pressure sensors and location sensors, such as global positioning systems (GPS). The set of sensors may also include gyroscopes operatively coupled with the location sensors and associated with a speed measurement system of the vessel. The controller unit is also communicably coupled to the at least one motion sensor arranged on the first Magnus rotor. The at least one motion sensor may be for example an accelerometer or a gyrocope. The motion sensor may also be a combination of an accelerometer and a gyroscope. When a gyroscope is used, it can be used for determining the pitch and/or roll of the vessel.

In an embodiment, the set of sensors may be arranged on the vessel. The set of sensors may comprise for example wind sensors, location sensors and/or gyroscopes (which gyroscopes are different from the possible gyroscope of the motion sensor mentioned above). For example, the set of sensors may be arranged on a deck of the vessel, allowing the wind sensors to measure relative wind direction and relative wind speed, and the location sensors and the gyroscopes to determine speed over ground (SOG), course over ground (COG) and heading direction (HDG) of the vessel. Similarly, the air temperature sensors and the air pressure sensors may be also arranged (or mounted on the deck) to measure air temperature and air pressure on the deck. Alternatively, the set of sensors may be arranged on other parts of the vessel, such as any suitable position on stern, bow or bridge of the vessel (or ship). Specifically, the set of sensors may be arranged on any suitable portion of the vessel that allows the set of sensors to measure climatic or weather conditions (such as wind speed, wind direction, air temperature and air pressure) and the vessel s speed.

The apparatus further comprises at least one motion sensor for determining at least one of linear acceleration of the vessel or an angular acceleration of the vessel and the controller unit is configured to receive at least one of linear motion sensor value of the vessel from the at least one motion sensor, angular motion sensor value of the vessel from the at least one motionsensor and speed of the vessel from a speed measurement system of the vessel. The controller unit is configured to also use the determined at least one of linear acceleration, angular acceleration or speed for determining the optimised rotation speed value and rotation direction for the first Magnus rotor.

According to yet another embodiment, a first motion sensor is arranged to a first portion of the first Magnus rotor and a second motion sensor is arranged to a second portion of the first Magnus rotor, wherein the distance between the first portion of the first Magnus rotor and a deck of the vessel is smaller than the distance between the second portion of the first Magnus rotor and the deck of the vessel.

As mentioned above, the at least one motion sensor may be arranged on the at least one Magnus rotor. The apparatus may also comprise more than one sensor, for example a second sensor. For example, a first motion sensor can be arranged on a first portion of the first Magnus rotor and a second motion sensor arranged to a second portion of the first Magnus rotor. Further, the distance between the first portion of the first Magnus rotor and a deck of the vessel is smaller than the distance between the second portion of the first Magnus rotor and the deck of the vessel. Specifically, the first and the second motion sensors are spaced apart from each other, for example, arranged at different heights (on the first Magnus rotor) with respect to the deck of the vessel. For example, if the first motion sensor and the second motion sensor are arranged within a distance from each other, the distance is at least half of a height of the first Magnus rotor.

According to one embodiment, the second motion sensor may be arranged to a second Magnus rotor. In other words, when the vessel includes more than one Magnus rotor, such as the first and second Magnus rotors, the motion sensors may be associated with both the Magnus rotors. Therefore, the second Magnus rotor is communicably coupled to the controller unit with the help of second motion sensor. Further, the first Magnus rotor and the second Magnus rotor are equipped with separate electrical motors. The first Magnus rotor and the second Magnus rotor can however have the same speed and direction of rotation, if needed. Each Magnus rotor can have a same speed and direction of rotation, or each Magnus rotor can have different speed and/or direction of rotation. It is also possible that two rotors have the same speed and direction and a third and/or a fourth rotor have a different speed and/or rotor. Each motor can be equipped with a frequency converter or the motors can have a common frequency converter. Furthermore, the apparatus may comprise more than two sensors, such as three, four, five, six or more sensors. For example, each Magnus rotor may be equipped with one, two or three sensors. The sensors are preferably arranged at a distance from each other.

In an embodiment, the controller unit may be a computing device having a processor installed therein for processing data received from the set of sensors. Further, the controller unit may be an embedded system that controls various operational aspects of the vessel. In such instance, the controller unit may be equipped with various modules, such as power transmission control module, data collection and analyzing module, and the like.

In one embodiment, the controller unit comprises a user interface which includes a tab for Magnus rotor propulsion power request and a tab for operation mode selection. The tab for Magnus rotor propulsion power request enables in setting (or defining) an amount of propulsion power required from the Magnus rotors for the propulsion of the vessel. In an example, the power request may be defined in kilowatt (kW), i.e. amount of propulsion power required from the Magnus rotors to propel the vessel.

The amount of propulsion power may be associated with a speed of the vessel, for example a higher speed may require higher propulsion power compared to a lower speed of the vessel. Further, the tab for operation mode selection may present a plurality of modes for selection, based upon which a rotational damping procedure (corresponding to the selected mode) may be initiated, which is explained in greater detail herein later.

In an embodiment, the controller unit comprises the user interface for selecting to initiate the rotational damping procedure. For example, the user interface may be one of a touch screen interface or buttons, selection of which initiates the rotational damping procedure.

As mentioned above, the controller unit is communicably coupled to the set of sensors, therefore the controller unit collects and analyses data received from the set of sensors for enabling selection of a mode to initiate the rotational damping procedure. For example, the controller unit is configured to receive relative wind direction and relative wind speed from the wind measurement system. Specifically, the wind sensors measure the relative wind direction and the relative wind speed. Also, the air temperature sensors and the air pressure sensors measure the wind (or air) temperature and pressure, respectively. Thereafter, the wind measurement system, the air temperature sensors and the air pressure sensors transmit the measured information to the controller unit for the analysis.

Further, the controller unit collects and analyses data from the first and second motion sensors arranged on the first and second Magnus rotors, respectively. According to an embodiment, the at least one motion sensor is configured to determine at least one of linear acceleration value of the vessel or an angular acceleration value of the vessel. The controller unit is configured to receive at least one of linear motion sensor value of the vessel from the at least one motion sensor, angular motion sensor value of the vessel from the at least one motion sensor, and speed of the vessel from the speed measurement system of the vessel. The at least one motion sensor may be configured to determine the linear acceleration of the vessel from the linear movements, such as the heave, the sway and the surge. Moreover, the at least one motion sensor may be configured to determine the angular acceleration of the vessel from the rotational movements, such as the roll, the pitch and the yaw. In an embodiment, the angular acceleration can be indirectly determined from the accelerations along x, y and z axis (i.e. without measuring directly), as a vast majority of back-and-forth movements are due to sway of the vessel.

The controller unit is configured to select a damping mode from a group consisting of at least a first damping mode and a second damping mode. In an embodiment, the damping mode can be selected by an operator responsible for the operation of the vessel or operating the vessel. Alternatively, the damping mode may be selected automatically by the controller unit based on collected and analysed data received from the set of sensors and the motion sensors. In an embodiment, the damping mode includes optimised energy consumption (the first damping mode) and maximum roll damping (the second damping mode). According to an embodiment, the damping mode also includes a balance between optimised energy consumption and maximum roll damping (i.e. a third damping mode).

In the first damping mode, the controller unit is configured to minimize (in all conditions) energy consumption, i.e. fuel consumption of the vessel for reaching the best possible net savings. For example, the controller unit may use a control algorithm according to which gain on net fuel savings is maximized considering the difference between the forward thrust produced by the Magnus rotors and the energy consumed in rotating the Magnus rotors. Further, in the first damping mode a roll motion reduction effect comes into play, however the control algorithm may exclude this factor.

Further, the controller unit is also configured to consider information from the set of sensors, and the motion sensors during the selection of the first damping mode. For example, the information includes information related to weather conditions, such as the wind speed, the wind direction, the air temperature and the air pressure. Further, the information includes information related to vessel movement, such as the speed over ground (SOG), the course over ground (COG) and the heading direction (HDG). Moreover, the information includes information regarding the Magnus rotors (such as the first Magnus rotor) propulsion power request, i.e. maximum propulsion power that can be produced by the Magnus rotors. Thereafter, the controller unit is configured to determine an optimised rotation speed value and rotation direction for the Magnus rotors (such as the first Magnus rotor based on the propulsion power request and information from the set of sensors and the motion sensors) suitable for attaining a maximum fuel savings.

The controller unit is configured to determine the optimised rotation speed value and rotation direction to optimise a frictional resistance of the Magnus rotors (such as the first Magnus rotor) for the selected damping mode (for example, the first damping mode), by calculating the frictional resistance the first Magnus rotor would generate against motions of the vessel with alternative rotation speed values and rotation directions, and based on the determined relative wind direction and relative wind speed. Further, the controller unit is configured to control the controllable electrical motor to rotate the first Magnus rotor with the optimised rotation speed and rotation direction to damp motions of the vessel. In an embodiment, the term frictional resistance means the gyroscopic force resisting angular movement, and lift and drag generated by air flow moving against the Magnus rotors (such as the first Magnus rotor).

In an example, when the vessel is sailing in steady weather condition (no turbulence or high tides) and the wind speed and direction are also assisting the COG (i.e. the wind is blowing with a speed and in a direction which allows the vessel to attain the COG), in such instance the first damping mode may be selected for optimised energy consumption. This is because in the steady sailing condition along with wind support and without a need of damping any motion or movement (such as roll damping), the vessel may be simply sailed to follow the COG and maintain a required SOG with the optimum energy consumption. Specifically, the optimum energy consumption is associated with the lone use of power provided to the Magnus rotors (such as the first Magnus rotor) to propel the vessel without performing any damping action.

In the second damping mode (i.e. the maximum roll damping mode), the controller unit is configured to maximize the roll damping regardless of the energy consumption (i.e. the power consumption of the vessel). In an embodiment, when the determined angular acceleration (and/or linear acceleration) of the vessel exceeds a preset limit, the controller unit is configured to activate (or select) the second damping mode. For example, the preset limit may be associated with the weather conditions subjected to the vessel. Also, the preset limit may be based on the vessel s characteristics, such as shape, weight and the like. It is to be understood that high angular acceleration (and/or linear acceleration) of the vessel may be associated with high and adverse wind condition.

According to an embodiment, the second damping mode is beneficial for handling the vessel sailing in difficult sea conditions, for example in high turbulence or high waves. In such instance, the power (or fuel) consumption of the vessel may be increased to attain the maximum roll damping because vessel s safety becomes the primary concern. For example, the control algorithm may neglect the fuel savings factor in such instance. Specifically, the increased energy consumption is associated with the use of power by the Magnus rotors (such as the first Magnus rotor) to primarily attain the maximum roll damping with or without propelling the vessel. Therefore, the controller unit is configured to determine an optimised rotation speed value and rotation direction for the Magnus rotor (such as the first Magnus rotor) for the second damping mode. The optimised rotation speed may include increased or decreased rotational speed for the Magnus rotors, and the optimised rotation direction may include clock or counterclockwise rotation of the Magnus rotors. In an embodiment, the determined optimised rotation speed value and rotation direction for the Magnus rotors may be based on propulsion force magnitude and direction calculation, gyroscopic resistance calculation and aerodynamic resistance calculation, i.e. based on the information provided by the set of sensors and the motion sensors to the controller unit.

In an embodiment, the second damping mode may be selected for an anchor vessel. For example, the controller unit may be configured to determine whether the vessel is sailing or anchored by checking the SOG of the vessel, which may be provided by the speed measurement system of the vessel. In an example, when the vessel is anchored, a Magnus rotor (of the Magnus rotors) may rotate in opposite direction in order to neutralize the thrust loading from other Magnus rotors and hold the vessel steady upon selection of the second damping mode.

According to an embodiment, upon selection of the second damping mode if the determined optimised rotation speed value and rotation direction leads to some unwanted behaviour on the vessel, then the rotation speed value and rotation direction may be limited. For example, the unwanted behaviour on the vessel may includes an anchored vessel that starts to turn (i.e. perform yaw) if the optimised rotation speed value and rotation direction of a Magnus rotor is too strong.

In the third damping mode (i.e. the balance between the optimised energy consumption and the maximum roll damping), the controller unit is configured to seek for maximum optimised energy consumption with the maximum rotations of the first Magnus rotor. Specifically, upon selection of the third damping mode, the controller unit is configured to provide maximum rotations to the Magnus rotors (such as the first Magnus rotor) in order to cover maximum distance in less time, and simultaneously attain in the process, the maximum roll damping and the optimised energy consumption. In an example, the controller unit is configured to consider the determined optimised rotation speed values and rotation directions for both the modes (i.e. the optimised energy consumption and the maximum roll damping), and thereafter compare the determined optimised rotation speed values and rotation directions. Therefore, an end result for the selection of the third mode is to provide the maximum rotation speed to the Magnus rotors with the optimised energy consumption and the maximum roll damping. In an example, when the vessel is sailing or anchored in moderate weather condition (i.e. moderate turbulence or medium tides), the third damping mode may be selected for optimising both the energy consumption and the maximum roll damping. Specifically, the optimum energy consumption and the maximum roll damping may be associated with the use of power provided to the Magnus rotors (such as the first Magnus rotor) to equally propel the vessel and to attain the maximum roll damping.

As mentioned above, the vessel comprises at least one Magnus rotor (or more than one, such as the first and the second Magnus rotors) arranged above the water line of the vessel and attached to the body of the vessel. Therefore, the controller unit is configured to determine an optimised rotation speed value and rotation direction for the second Magnus rotor as well (as described for the first Magnus rotor herein above). The optimised rotation speed value and rotation direction for the second Magnus rotor may be determined to optimise a frictional resistance of the second Magnus rotor for the selected damping mode. Further, a combined or final optimised rotation speed value and rotation direction (for the first and second Magnus rotors) may be determined by calculating a cumulative frictional resistance the first Magnus rotor and the second Magnus rotor would generate against motions of the vessel with alternative rotation speed values and rotation directions, and based on the determined relative wind direction and relative wind speed.

The present disclosure provides a method and an apparatus for damping motions of an aquatic vessel, particularly, a roll damping of the aquatic vessel. The disclosed system and method use at least one Magnus rotor, arranged above a water line of the vessel for damping the motions of the vessel, which is primarily responsible for propelling the vessel. The disclosed method and apparatus also consider weather condition, primarily wind speed and direction, for damping the motions of the vessel. Specifically, the present disclosure enables in selecting a damping mode, to optimize frictional resistance of the Magnus rotor corresponding to the selected damping mode, and thereby optimizing power consumption of the Magnus rotor (along with damping the motions of the vessel). The selection of the damping mode (which may be manual or automatic) based on different weather conditions that vessel is subject to, for example in steady weather condition an optimised energy consumption (i.e. a first damping mode) is selected for maximizing the power saving (by solely using the power of the Magnus rotor for propelling the vessel). Similarly, for rough weather condition (when the vessel is subjected to high waves or turbulence) a maximum roll damping (i.e. a second damping mode) is selected for using the power of the Magnus rotor (for primarily damping the motions of the vessel) and ensuring safety of the vessel (and/or cargo, passengers and crew members). Additionally, for moderate weather condition (when the vessel is subjected to moderate tides) a balance between optimised energy consumption and maximum roll damping (i.e. a third damping mode) is selected for using the power of the Magnus rotor (for both propelling the vessel and damping the motions of the vessel) and ensuring both the safety of the vessel and the optimizing the power consumption.

### DETAILED DESCRIPTION OF THE DRAWINGS

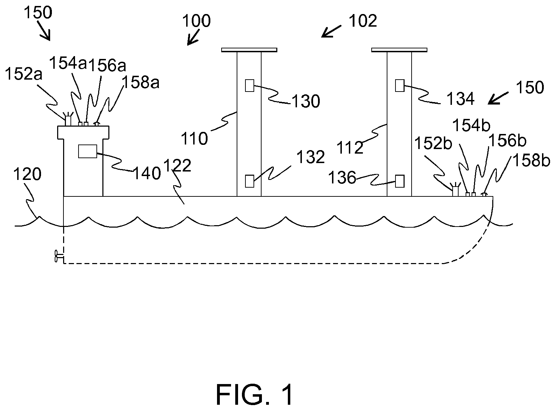

Referring to FIG. 1, illustrated is schematic illustration of a vessel **100** having an apparatus **102** for damping motions of the vessel **100**, in accordance with an embodiment of the present disclosure. As shown, the vessel **100** is a ship having at least one Magnus rotor (such as a first Magnus rotor **110** and a second Magnus rotor **112)** arranged above a water line **120** of the vessel **100** and attached to a body **122** of the vessel **100.** The apparatus **102** includes (or associated with) the first Magnus rotor **110** and the second Magnus rotor **112**. Specifically, the apparatus **102** includes at least one motion sensor arranged on the first Magnus rotor **110** and the second Magnus rotor **112**. For example, the first Magnus rotor **110** is arranged with the motion sensors **130** and **132**, whereas the second Magnus rotor **112** is arranged with the motion sensors **134** and **136**. The motion sensors **130-136** are operable to determine at least one of linear acceleration and angular acceleration of the vessel **100.**

The apparatus **102** further includes a controller unit **140** communicably coupled to a set of sensors **150**. The set of sensors **150** includes sensors associated with a wind measurement system. For example, the set of sensors **150** includes wind sensors **152a-b** (operable to determine wind speed and direction). The set of sensors **150** also includes air temperature sensors **154a-b**, air pressure sensors **156a-b** and location sensors **158a-b.** The set of sensors **150** may also include gyroscopes (not shown) operatively coupled with the location sensors **158a-b**, and associated with a speed measurement system of the vessel **100.** The controller unit **140** is also communicably coupled to the motion sensors **130-136** arranged on the first Magnus rotor **110** and the second Magnus rotor **112**.

The controller unit **140** is configured to select a damping mode from a group including a first damping mode, a second damping mode and a third damping mode. Further, the controller unit **140** is configured to determine optimised rotation speed values and rotation directions for the first and second Magnus rotors **110, 112** to optimise a cumulative frictional resistance of the first and second Magnus rotors **110, 112** for the selected damping mode. The optimised rotation speed values and rotation directions for the first and second Magnus rotors **110, 112** is determined by calculating the cumulative frictional resistance the first and second Magnus rotors **110, 112** would generate against motions of the vessel **100** with alternative rotation speed values and rotation directions of the first and second Magnus rotors **110**, **112**, and based on the determined relative wind direction and relative wind speed. The alternative rotation speed values and rotation directions for the first and second Magnus rotors **110, 112** are determined with the help of at least one of linear acceleration, angular acceleration or speed of the vessel **100.** Finally, the controller unit **140** is configured to use the optimised rotation speed values and rotation directions of the first and second Magnus rotors **110, 112** for damping the motions (such as rolling) of the vessel **100.**

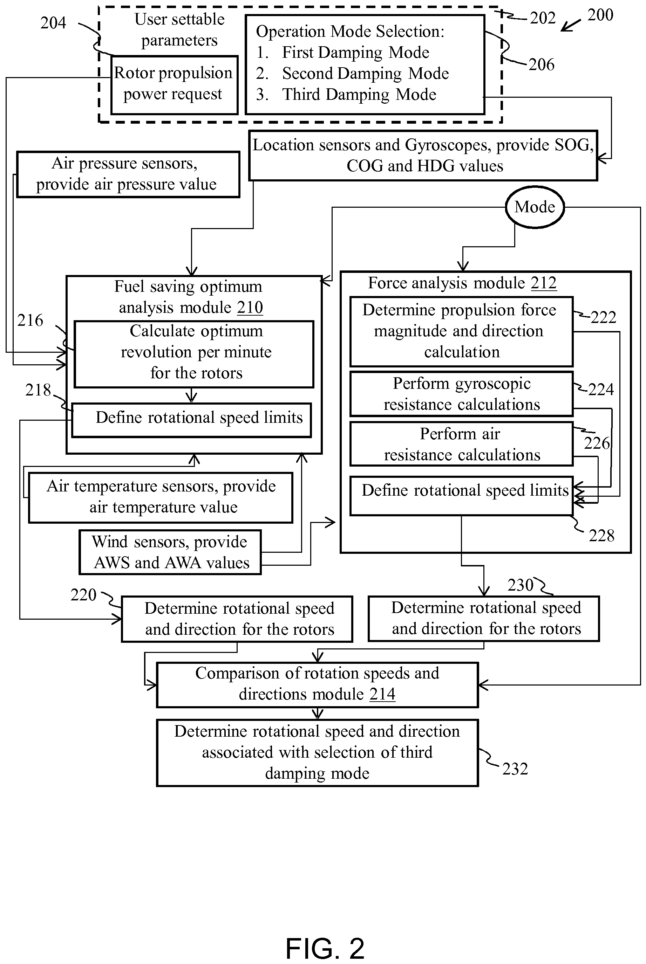

Referring now to FIGS. 2-5, illustrated are control diagrams associated with the controller unit **140** of the apparatus **102** (shown in FIG. 1) for implementation of various embodiments of the present disclosure. Specifically, FIG. 2 illustrates a control diagram **200** for damping motions of the vessel **100** by using Magnus rotors (such as, the first Magnus rotor **110** and the second Magnus rotor **112**), in accordance with an embodiment of the present disclosure.

The control diagram **200** depicts a user interface **202** (associated with the controller unit **140**) for enabling a user to set operational parameter for the vessel **100.** As shown, the user interface **202** provides a tab for settable parameter, such as rotor propulsion power request **204**, to be set by the user for the operation of the vessel **100**. The rotor propulsion power request **204** is associated with an amount of electrical power required to rotate the Magnus rotors for the operation (or propulsion) of the vessel **100.** In an example, the rotor propulsion power request **204** may be set (or defined) in kilowatt (kW), i.e. amount of propulsion power required from the Magnus rotors for the propulsion of the vessel **100.**

The user interface **202** also provides a tab for operation mode selection **206.** As shown, under the tab of operation mode selection **206** three operational modes are provided, i.e. a first damping mode, a second damping mode and a third damping mode. The tab for the operation mode selection **206** allows the user to select one of the first damping, the second damping and the third damping modes, which may be based on the value (kWs) set for the rotor propulsion power request **204**. Further, the selected mode is based on various external factors (for example, wind direction, wind speed and the like) associated with the vessel **100.** Otherwise, based on the set rotor propulsion power request **204** the controller unit **140** may automatically select a mode among the first damping, the second damping and the third damping modes.

The control diagram **200** further depicts details associated with selection of various operational modes. Specifically, the control diagram **200** includes a tab for fuel saving optimum analysis module **210** associated with the selection of the first damping mode (i.e. optimised energy consumption mode), a tab for force analysis module **212** associated with the selection of the second damping mode (i.e. maximum roll damping mode) and a tab for comparison of rotation speeds and directions module **214** associated with the selection of the third damping mode (a balance between optimised energy consumption and maximum roll damping mode).

As shown, the fuel saving optimum analysis module **210** includes data associated with a set of sensors. The set of sensors include but not limited to sensors of a wind measurement system such as wind sensors. The set of sensors also includes air temperature sensors, air pressure sensors, gyroscopes and location sensors, such as global positioning systems (GPS). The wind sensors measure relative wind direction (i.e. apparent wind angle or AWA) and relative wind speed (i.e. apparent wind speed or AWS). The air temperature sensors and the air pressure sensors measure the wind temperature and pressure respectively. The location sensors and gyroscopes measure speed over ground of the vessel **100** (SOG), course over ground (COG), and heading direction (HDG).

Based on the data collected from the various sensors, the optimum revolution per minute (RMP) for the rotors is calculated at step **216** by the fuel saving optimum analysis module **210**. Thereafter, at step **218** rotational speed limits are defined by the fuel saving optimum analysis module **210**. The defined rotational speed limits correspond to the rotational speed limits for the rotors for the selected first damping mode based on the sensors data. Further, at step **220** rotational speed and direction for the rotors are determined based on the selection of the first damping mode. In other words, upon user or automatic selection of the first damping mode, the rotors of the vessel **100** are configured to operate (or function) based on the rotational speed and direction determined at the step **220.** The rotational speed and direction (determined at the step **220**) corresponds to selection of the first damping mode, which is responsible for operating the vessel **100** with maximum power efficiency.

Further, the force analysis module **212** includes data associated with the wind sensors i.e. the relative wind speed and direction. Based on the data collected from the wind sensors the force analysis module **212** is operable to determine propulsion force magnitude and direction calculation at step **222,** thereafter at step **224** gyroscopic resistance calculations are performed, and at step **226**, air resistance calculations are performed. Thereafter, based on (the propulsion force magnitude and direction calculation at step **222**, the gyroscopic resistance calculations performed at step **224**, and the air resistance calculations performed at step **226**), at step **228** rotational speed limits is defined by the force analysis module **212** corresponding to the second damping mode. Further, at step **230**, rotational speed and direction for the rotors are determined, which is based on the rotational speed limits determined at step **228**. In other words, upon user or automatic selection of the second damping mode, the rotors of the vessel **100** are configured to operate (or function) based on the rotational speed and direction determined at the step **230**. The rotational speed and direction (determined at the step **230**) corresponds to selection of the second damping mode, which is responsible for operating the vessel **100** with maximum roll damping.

Further, the comparison of rotation speeds and directions module **214** takes into consideration the rotational speed and direction determined at steps **220** and **230** (associated with the selection of the first and second damping modes). At step **232**, the rotational speed and direction are determined associated with the selection of the third damping mode. The rotational speed and direction determined at step **232** is responsible for operating the vessel **100** with maximum fuel efficiency and roll damping.

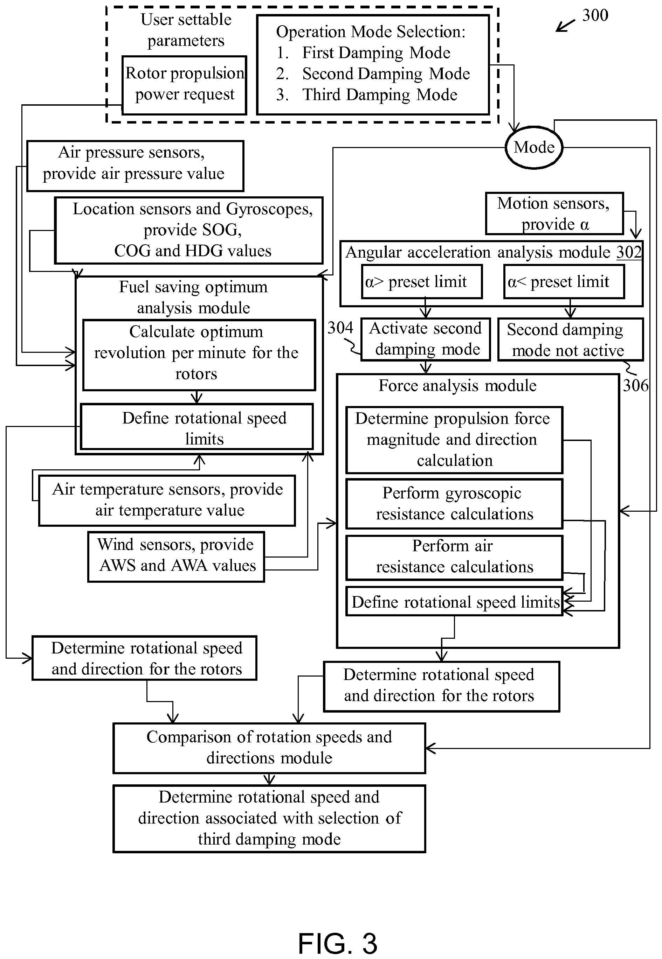

Referring now to FIG. 3, illustrated is a control diagram **300** for damping motions of the vessel **100** by using Magnus rotors (such as, the first Magnus rotor **110** and the second Magnus rotor **112)** when angular acceleration of the vessel **100** is also considered, in accordance with an embodiment of the present disclosure. Specifically, the control diagram **300** is similar to the control diagram **200** of FIG. 2, except motion sensors data (i.e. angular acceleration of the vessel **100**) to be considered for damping motions of the vessel **100.**

As shown in FIG. 3, an angular acceleration analysis module **302** performs angular acceleration analysis of data collected from at least one motion sensor. The at least one motion sensor measures angular acceleration ( ) of the vessel **100** based on motions of the vessel **100** such as roll, pitch and the like. If the measured angular acceleration exceeds a preset limit, then the second damping mode is activated at step **304**, which follows the force analysis module **212** (defined in FIG. 2). Otherwise, if the measured angular acceleration is less than the preset limit, then at step **306**, the second damping mode is not activated.

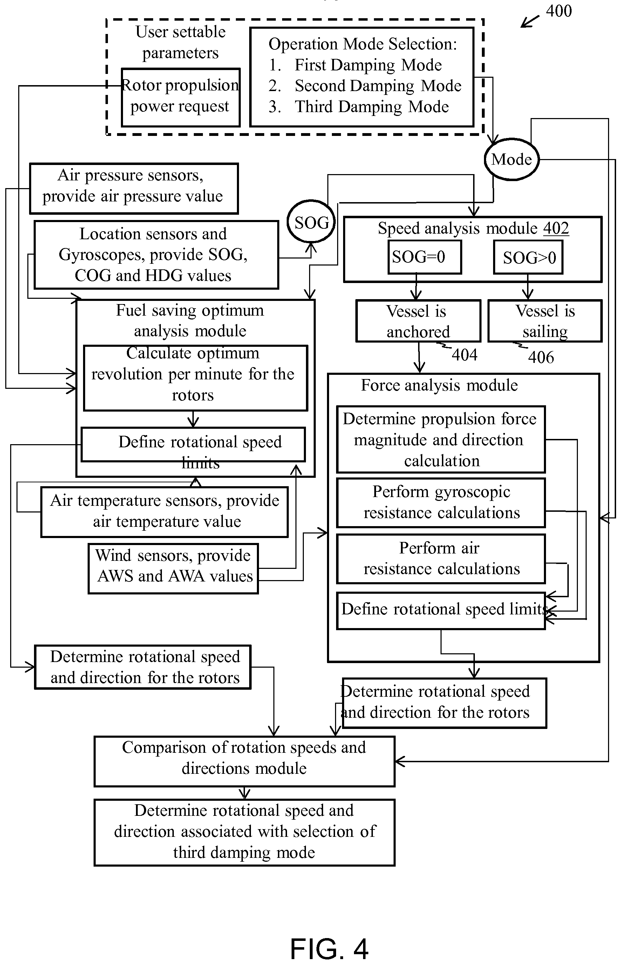

Referring now to FIG. 4, illustrated is a control diagram **400** for damping motions of the vessel **100** by using Magnus rotors (such as, the first Magnus rotor **110** and the second Magnus rotor **112)** when speed of the vessel **100** is also considered, in accordance with an embodiment of the present disclosure. Specifically, th control diagram **400** is similar to the control diagram **200** of FIG. 2, except vessel s **100** speed analysis is performed for damping motions of the vessel **100.**

As shown in FIG. 4, a speed analysis module **402** performs speed analysis of the vessel **100.** If the SOG is equal to zero, then it means that the vessel **100** is anchored (as shown at step **404**) and if the SOG is greater than zero, then it means that the vessel **100** is sailing (as shown at step **406**). Thereafter, the force analysis is performed by the force analysis module **212** (as explained in conjunction with FIG. 2).

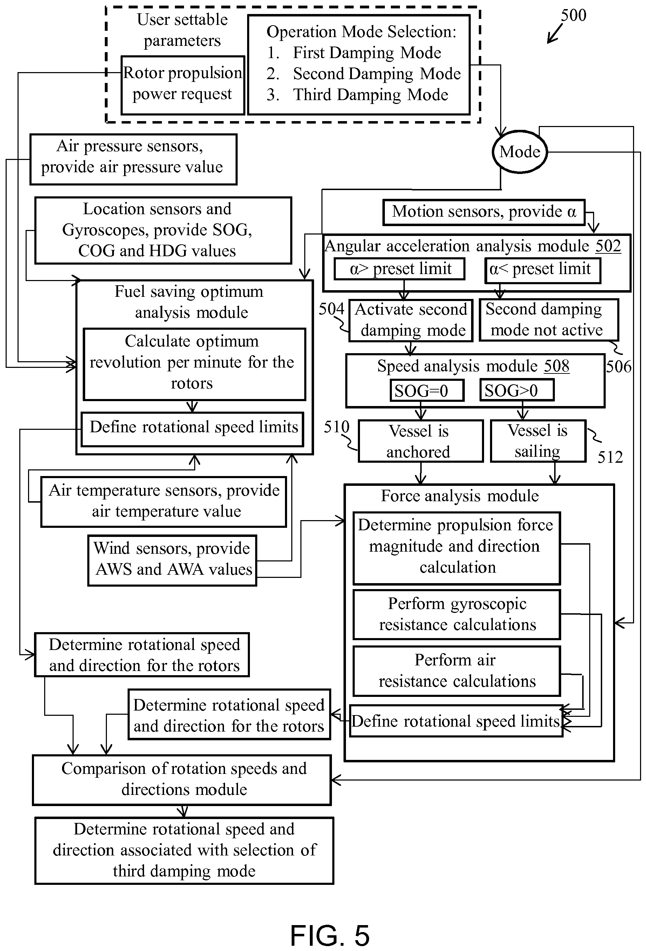

Referring now to FIG. 5, illustrated is a control diagram **500** for damping motions of the vessel **100** by using Magnus rotors (such as, the first Magnus rotor **110** and the second Magnus rotor **112)** when both the angular acceleration and the speed of the vessel **100** are considered, in accordance with an embodiment of the present disclosure. Specifically, the control diagram **500** is similar to the control diagram **200** of FIG. 2, except both the angular acceleration and the speed of the vessel **100** are considered for damping motions of the vessel **100.**

As shown in FIG. 5, an angular acceleration analysis module **502** performs angular acceleration analysis of data collected from at least one motion sensor. The at least one motion sensor measures angular acceleration ( ) of the vessel **100** based on motions of the vessel **100** such as roll, pitch and the like. If the measured angular acceleration exceeds a preset limit, then the second damping mode is activated at step **504**. Otherwise, if the measured angular acceleration is less than the preset limit, then at step **506,** the second damping mode is not activated. If the second damping mode is activated, then a speed analysis module **508** performs speed analysis of the vessel **100.** If the SOG is equal to zero, then it means that the vessel **100** is anchored (shown at step **510**) and if the SOG is greater than zero, then it means that the vessel **100** is sailing (shown at step 512). Further, the force analysis is performed by the force analysis module **212** (as explained in conjunction with FIG. 2).

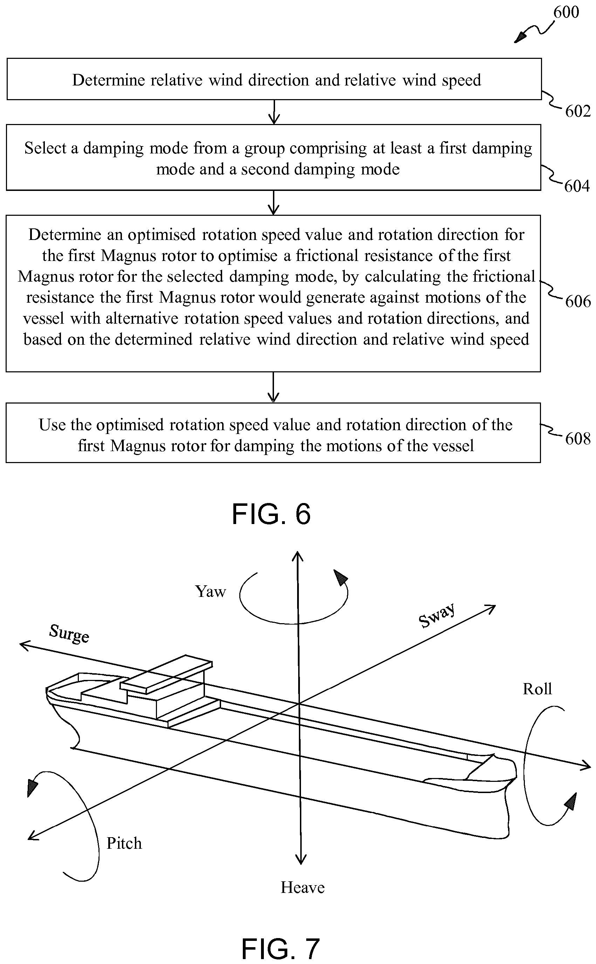

Referring to FIG. 6, illustrated are steps of a method **600** for damping motions of a vessel **100** by using Magnus rotors (the first Magnus rotor **110** and the second Magnus rotor 112), in accordance with an embodiment of the present disclosure. At step **602**, relative wind direction and relative wind speed is determined. At step **604**, a damping mode from a group comprising at least a first damping mode and a second damping mode is selected. At step **606**, an optimised rotation speed value and rotation direction for the first Magnus rotor is determined to optimise a frictional resistance of the first Magnus rotor for the selected damping mode, by calculating the frictional resistance the first Magnus rotor would generate against motions of the vessel with alternative rotation speed values and rotation directions, and based on the determined relative wind direction and relative wind speed.

At step **608**, the optimised rotation speed value and rotation direction of the first Magnus rotor is used for damping the motions of the vessel. Further, the steps **602** and **608** are only illustrative and other alternatives can also be provided where one or more steps are added, one or more steps are removed, or one or more steps are provided in a different sequence without departing from the scope of the claims herein.

FIG. 7 is an illustration of the various movements of a vessel as used in the present description, and shows the directions of heave, sway, surge, roll, pitch and yaw.

Modifications to embodiments of the present disclosure described in the foregoing are possible without departing from the scope of the present disclosure as defined by the accompanying claims. Expressions such as including , comprising , incorporating , have , is used to describe and claim the present disclosure are intended to be construed in a non-exclusive manner, namely allowing for items, components or elements not explicitly described also to be present. Reference to the singular is also to be construed to relate to the plural.

## Claims

1. A method for damping motions of a vessel (100) by using Magnus rotors, the vessel comprising at least a first Magnus rotor (110) arranged above a water line of the vessel and attached to a body (122) of the vessel, the method comprising:
- determining relative wind direction and relative wind speed; **characterised in that** the method further comprises
- selecting a damping mode from a group comprising at least a first damping mode and a second damping mode;
- determining at least one of a linear acceleration of the vessel, an angular acceleration of the vessel, speed of the vessel;
- determining an optimised rotation speed value and rotation direction for the first Magnus rotor to optimise a frictional resistance of the first Magnus rotor for the selected damping mode, by calculating the frictional resistance the first Magnus rotor would generate against motions of the vessel with alternative rotation speed values and rotation directions, and based on the determined relative wind direction, relative wind speed and at least one of linear acceleration, angular acceleration or speed; and
- using the optimised rotation speed value and rotation direction of the first Magnus rotor, for damping the motions of the vessel.

2. A method according to claim 1, wherein at least one of roll, pitch, yaw, surge, sway, and heave of the vessel (100) is determined based on angular and/or linear acceleration and the selection of damping mode is based on the determined at least one of roll, pitch, yaw, surge, sway and heave.

3. A method according to any of the preceding claims, wherein the group of damping modes comprises a third damping mode.

4. A method according to any of the preceding claims, wherein the damping mode is one of optimised energy consumption, maximum roll damping or a balance between optimised energy consumption and maximum roll damping.

5. A method according to any of the preceding claims, wherein the vessel comprises at least a second Magnus rotor (112) arranged above the water line of the vessel (100) and attached to the body (122) of the vessel, the method further comprising determining an optimised rotation speed value and rotation direction for the second Magnus rotor, by determining an optimised rotation speed value and rotation direction for the second Magnus rotor to optimise a frictional resistance of the second Magnus rotor for the selected damping mode, by calculating the cumulative frictional resistance the first Magnus rotor (110) and the second Magnus rotor would generate against motions of the vessel with alternative rotation speed values and rotation directions, and based on the determined relative wind direction and relative wind speed.

6. An apparatus (102) for damping motions of a vessel (100), the apparatus comprising:
- at least a first Magnus rotor (110) attachable to the body (122) of the vessel, above a water line of the vessel, wherein the first Magnus rotor is rotatable with a controllable electrical motor; and
- a controller unit (140) configured to
- receive relative wind direction and relative wind speed from a wind measurement system;
**characterised in that** it further comprises at least one motion sensor (130, 132) for determining at least one of linear acceleration of the vessel or an angular acceleration of the vessel and the controller unit is further configured to
- receive at least one of
- linear motion sensor value of the vessel from the at least one motion sensor;
- angular motion sensor value of the vessel from the at least one motion sensor;
- speed of the vessel from a speed measurement system of the vessel;- select a damping mode from a group consisting of at least a first damping mode and a second damping mode;
- determine an optimised rotation speed value and rotation direction for the first Magnus rotor to optimise a frictional resistance of the first Magnus rotor for the selected damping mode, by calculating the frictional resistance the first Magnus rotor would generate against motions of the vessel with alternative rotation speed values and rotation directions, and based on the determined relative wind direction, relative wind speed and at least one of linear acceleration, angular acceleration or speed; and
- control the controllable electrical motor to rotate the first Magnus rotor with the optimised rotation speed and rotation direction to damp motions of the vessel.

7. An apparatus (102) according to claim 6, wherein a first motion sensor (132) is arranged to a first portion of the first Magnus rotor (110) and a second motion sensor (130) is arranged to a second portion of the first Magnus rotor, wherein the distance between the first portion of the first Magnus rotor and a deck of the vessel is smaller than the distance between the second portion of the first Magnus rotor and the deck of the vessel (100).

8. An apparatus (102) according to any of the claims 6-7, wherein the first motion sensor (132) and the second motion sensor (130) are arranged within a distance from each other, wherein the distance is at least half of a height of the first Magnus rotor (110).

9. An apparatus (102) according to claim 6, wherein the second motion sensor is arranged to a second Magnus rotor (112).

10. An apparatus (102) according to any of the claims 6-9, wherein the first Magnus rotor (110) and the second Magnus rotor (112) are equipped with separate electrical motors.

11. An apparatus (102) according to any of the claims 6-10, wherein the controller unit (140) further comprises a user interface (202) for selecting to initiate rotational damping procedure.

## Patentansprüche

1. Verfahren zur Dämpfung von Bewegungen eines Schiffs (100) unter Verwendung von Magnus-Rotoren, wobei das Schiff mindestens einen ersten Magnus-Rotor (110) umfasst, der über einer Wasserlinie des Schiffs angeordnet und an einem Körper (122) des Schiffs angebracht ist, wobei das Verfahren Folgendes umfasst:
- Bestimmen einer relativen Windrichtung und relativen Windgeschwindigkeit;
**dadurch gekennzeichnet, dass** das Verfahren ferner Folgendes umfasst:
- Auswählen eines Dämpfungsmodus aus einer Gruppe umfassend mindestens einen ersten Dämpfungsmodus und einen zweiten Dämpfungsmodus;
- Bestimmen mindestens entweder einer Linearbeschleunigung des Schiffs, einer Winkelbeschleunigung des Schiffs oder Geschwindigkeit des Schiffs;
- Bestimmen eines optimierten Drehgeschwindigkeitswerts und einer Drehrichtung für den ersten Magnus-Rotor, um einen Reibungswiderstand des ersten Magnus-Rotors für den gewählten Dämpfungsmodus zu optimieren, durch Berechnen des Reibungswiderstands, den der erste Magnus-Rotor gegen Bewegungen des Schiffs mit alternativen Drehgeschwindigkeitswerten und Drehrichtungen erzeugen würde, und basierend auf der bestimmten relativen Windrichtung, relativen Windgeschwindigkeit und mindestens entweder einer Linearbeschleunigung, Winkelbeschleunigung oder Geschwindigkeit; und
- Verwenden des optimierten Drehgeschwindigkeitswerts und der Drehrichtung des ersten Magnus-Rotors zum Dämpfen der Bewegungen des Schiffs.

2. Verfahren nach Anspruch 1, wobei mindestens entweder ein Rollen, Nicken, Gieren, Längsbewegen, Querbewegen und Heben und Senken des Schiffs (100) basierend auf Winkel- und/oder Linearbeschleunigung bestimmt wird und die Auswahl des Dämpfungsmodus auf dem mindestens einen bestimmten Rollen, Nicken, Gieren, Längsbewegen, Querbewegen oder Heben und Senken basiert.

3. Verfahren nach einem der vorhergehenden Ansprüche, wobei die Gruppe der Dämpfungsmodi einen dritten Dämpfungsmodus umfasst.

4. Verfahren nach einem der vorhergehenden Ansprüche, wobei der Dämpfungsmodus entweder optimierter Energieverbrauch, maximale Rolldämpfung oder ein Gleichgewicht zwischen optimiertem Energieverbrauch und maximaler Rolldämpfung ist.

5. Verfahren nach einem der vorhergehenden Ansprüche, wobei das Schiff mindestens einen zweiten Magnus-Rotor (112) umfasst, der über der Wasserlinie des Schiffs (100) angeordnet und an dem Körper (122) des Schiffs angebracht ist, wobei das Verfahren ferner das Bestimmen eines optimierten Drehgeschwindigkeitswerts und einer Drehrichtung für den zweiten Magnus-Rotor umfasst, durch Bestimmen eines optimierten Drehgeschwindigkeitswerts und einer Drehrichtung für den zweiten Magnus-Rotor, um einen Reibungswiderstand des zweiten Magnus-Rotors für den gewählten Dämpfungsmodus zu optimieren, durch Berechnen des Gesamtreibungswiderstands, den der erste Magnus-Rotor (110) und der zweite Magnus-Rotor gegen die Bewegungen des Schiffs mit alternativen Drehgeschwindigkeitswerten und Drehrichtungen erzeugen würden, und basierend auf der bestimmten relativen Windrichtung und relativen Windgeschwindigkeit.

6. Vorrichtung (102) zur Dämpfung von Bewegungen eines Schiffs (100), wobei die Vorrichtung Folgendes umfasst:
- mindestens einen ersten Magnus-Rotor (110), der an den Körper (122) des Schiffs angebracht werden kann, über einer Wasserlinie des Schiffs, wobei der erste Magnus-Rotor mit einem steuerbaren Elektromotor drehbar ist; und
- eine Steuerungseinheit (140), die ausgestaltet ist,
- eine relative Windrichtung und relative Windgeschwindigkeit von einem Windmesssystem zu erhalten;
**dadurch gekennzeichnet, dass** sie ferner mindestens einen Bewegungssensor (130, 132) zum Bestimmen mindestens entweder einer Linearbeschleunigung des Schiffs oder einer Winkelbeschleunigung des Schiffs umfasst, und **dass** die Steuerungseinheit ferner ausgestaltet ist,
- Folgendes zu empfangen: mindestens entweder einen
- Linearbewegungssensorwert des Schiffs von dem mindestens einen Bewegungssensor;
- Winkelbewegungssensorwert des Schiffs von dem mindestens einen Bewegungssensor;
- Geschwindigkeit des Schiffs von einem Geschwindigkeitsmesssystem des Schiffs;
- einen Dämpfungsmodus aus einer Gruppe auszuwählen, die aus mindestens einem ersten Dämpfungsmodus und einem zweiten Dämpfungsmodus besteht;
- einen optimierten Drehgeschwindigkeitswert und eine Drehrichtung für den ersten Magnus-Rotor zu bestimmen, um einen Reibungswiderstand des ersten Magnus-Rotors für den gewählten Dämpfungsmodus zu optimieren, durch Berechnen des Reibungswiderstands, den der erste Magnus-Rotor gegen Bewegungen des Schiffs mit alternativen Drehgeschwindigkeitswerten und Drehrichtungen erzeugen würde, und basierend auf der bestimmten relativen Windrichtung, relativen Windgeschwindigkeit und mindestens entweder der Linearbeschleunigung, Winkelbeschleunigung oder Geschwindigkeit; und
- den steuerbaren Elektromotor anzusteuern, um den ersten Magnus-Rotor mit der optimierten Drehgeschwindigkeit und Drehrichtung zu drehen, um Bewegungen des Schiffs zu dämpfen.

7. Vorrichtung (102) nach Anspruch 6, wobei ein erster Bewegungssensor (132) an einem ersten Abschnitt des ersten Magnus-Rotors (110) angeordnet ist und ein zweiter Bewegungssensor (130) an einem zweiten Abschnitt des ersten Magnus-Rotors angeordnet ist, wobei der Abstand zwischen dem ersten Abschnitt des ersten Magnus-Rotors und einem Deck des Schiffs kleiner als der Abstand zwischen dem zweiten Abschnitt des ersten Magnus-Rotors und dem Deck des Schiffs (100) ist.

8. Vorrichtung (102) nach einem der Ansprüche 6 bis 7, wobei der erste Bewegungssensor (132) und der zweite Bewegungssensor (130) innerhalb eines Abstands voneinander angeordnet sind, wobei der Abstand mindestens halb so groß wie eine Höhe des ersten Magnus-Rotors (110) ist.

9. Vorrichtung (102) nach Anspruch 6, wobei der zweite Bewegungssensor an einem zweiten Magnus-Rotor (112) angeordnet ist.

10. Vorrichtung (102) nach einem der Ansprüche 6 bis 9, wobei der erste Magnus-Rotor (110) und der zweite Magnus-Rotor (112) mit getrennten Elektromotoren ausgestattet sind.

11. Vorrichtung (102) nach einem der Ansprüche 6 bis 10, wobei die Steuerungseinheit (140) ferner eine Benutzerschnittstelle (202) zum Auswählen des Beginnens einer Drehdämpfungsprozedur umfasst.

## Revendications

1. Procédé d'amortissement de mouvements d'un navire (100) à l'aide de rotors à effet Magnus, le navire comprenant au moins un premier rotor à effet Magnus (110) disposé au-dessus d'une ligne de flottaison du navire et fixé à une coque (122) du navire, le procédé consistant à:
- déterminer une direction relative du vent et une vitesse relative du vent;
**caractérisé en ce que** le procédé consiste en outre à :
- sélectionner un mode d'amortissement à partir d'un groupe comprenant au moins un premier mode d'amortissement et un deuxième mode d'amortissement ;
- déterminer au moins une accélération linéaire du navire, une accélération angulaire du navire, une vitesse du navire ;
- déterminer une valeur de vitesse de rotation et une direction de rotation optimisées pour le premier rotor à effet Magnus afin d'optimiser une résistance au frottement du premier rotor à effet Magnus pour le mode d'amortissement sélectionné, en calculant la résistance au frottement que le premier rotor à effet Magnus générerait par rapport à des mouvements du navire ayant des valeurs de vitesse de rotation et des directions de rotation alternatives, et basée sur la direction relative du vent déterminée, la vitesse relative du vent et au moins une d'une accélération linéaire, d'une accélération angulaire ou d'une vitesse ; et
- utiliser la valeur de la vitesse de rotation et la direction de rotation optimisées du premier rotor à effet Magnus pour amortir les mouvements du navire.

2. Procédé selon la revendication 1, dans lequel au moins un élément parmi le roulis, le tangage, le lacet, le cavalement, l'embardée et le pilonnement du navire (100) est déterminé sur la base d'une accélération linéaire et/ou angulaire et la sélection du mode d'amortissement est basée sur au moins l'élément déterminé parmi le roulis, le tangage, le lacet, le cavalement, l'embardée et le pilonnement.

3. Procédé selon l'une quelconque des revendications précédentes, dans lequel le groupe de modes d'amortissement comprend un troisième mode d'amortissement.

4. Procédé selon l'une quelconque des revendications précédentes, dans lequel le mode d'amortissement est un élément parmi une consommation d'énergie optimisée, un amortissement de roulis maximum ou un équilibre entre une consommation d'énergie optimisée et un amortissement de roulis maximum.

5. Procédé selon l'une quelconque des revendications précédentes, dans lequel le navire comprend au moins un second rotor à effet Magnus (112) disposé au-dessus de la ligne de flottaison du navire (100) et fixé à la coque (122) du navire, le procédé consistant en outre à déterminer une valeur de vitesse de rotation et une direction de rotation optimisées pour le second rotor à effet Magnus, en déterminant une valeur de vitesse de rotation et une direction de rotation optimisées pour le second rotor à effet Magnus afin d'optimiser une résistance au frottement du second rotor à effet Magnus pour le mode d'amortissement sélectionné, en calculant la résistance cumulée au frottement que le premier rotor à effet Magnus (110) et le second rotor à effet Magnus généreraient par rapport à des mouvements du navire ayant des valeurs de vitesse de rotation et des directions de rotation alternatives, et basée sur la direction relative du vent et la vitesse relative du vent déterminées.

6. Appareil (102) d'amortissement des mouvements d'un navire (100), l'appareil comprenant :
- au moins un premier rotor à effet Magnus (110) pouvant être fixé à la coque (122) du navire, au-dessus d'une ligne de flottaison du navire, le premier rotor à effet Magnus pouvant tourner avec un moteur électrique réglable ; et
- une unité de réglage (140) conçue pour :
- recevoir une direction relative du vent et une vitesse relative du vent provenant d'un système anémométrique ;
**caractérisé en ce qu'il** comprend en outre au moins un détecteur de mouvement (130, 132) permettant de déterminer au moins un élément parmi une accélération linéaire du navire ou une accélération angulaire du navire, et l'unité de réglage est conçue en outre pour :
- recevoir au moins un élément parmi :
- une valeur de détecteur de mouvement linéaire du navire provenant de l'au moins un détecteur de mouvement ;
- une valeur de détecteur de mouvement angulaire du navire provenant de l'au moins un détecteur de mouvement ;
- une vitesse du navire provenant d'un système de compteur de vitesse du navire ;
- sélectionner un mode d'amortissement à partir d'un groupe se composant au moins d'un premier mode d'amortissement et d'un deuxième mode d'amortissement ;
- déterminer une valeur de vitesse de rotation et une direction de rotation optimisées pour le premier rotor à effet Magnus afin d'optimiser une résistance au frottement du premier rotor à effet Magnus pour le mode d'amortissement sélectionné, en calculant la résistance au frottement que le premier rotor à effet Magnus générerait par rapport à des mouvements du navire ayant des valeurs de vitesse de rotation et des directions de rotation alternatives, et basée sur la direction relative du vent déterminée, la vitesse relative du vent et au moins une d'une accélération linéaire, d'une accélération angulaire ou d'une vitesse ; et
- régler le moteur électrique réglable pour faire tourner le premier rotor à effet Magnus avec la vitesse de rotation et la direction de rotation optimisées afin d'amortir les mouvements du navire.

7. Appareil (102) selon la revendication 6, dans lequel un premier détecteur de mouvement (132) est disposé sur une première partie du premier rotor à effet Magnus (110) et un second détecteur de mouvement (130) est disposé sur une seconde partie du premier rotor à effet Magnus, la distance entre la première partie du premier rotor à effet Magnus et un pont du navire étant inférieure à la distance entre la seconde partie du premier rotor à effet Magnus et le pont du navire (100).

8. Appareil (102) selon l'une quelconque des revendications 6 à 7, dans lequel le premier détecteur de mouvement (132) et le second détecteur de mouvement (130) sont disposés à une certaine distance l'un de l'autre, la distance étant égale à au moins la moitié d'une hauteur du premier rotor à effet Magnus (110).

9. Appareil (102) selon la revendication 6, dans lequel le second détecteur de mouvement est disposé sur un second rotor à effet Magnus (112).

10. Appareil (102) selon l'une quelconque des revendications 6 à 9, dans lequel le premier rotor à effet Magnus (110) et le second rotor à effet Magnus (112) sont équipés de moteurs électriques distincts.

11. Appareil (102) selon l'une quelconque des revendications 6 à 10, dans lequel l'unité de réglage (140) comprend en outre une interface utilisateur (202) à sélectionner en vue de déclencher une procédure d'amortissement de rotation.
